# EUROPEAN PATENT SPECIFICATION

(11) **EP 1 464 251 B1**
(45) Date of publication and mention of the grant of the patent: **21.06.2006**
(21) Application number: 04007505.3
(22) Date of filing: 29.03.2004
(51) Int. Cl.: A47B 47/00

(54) **Modular support structure for furniture**
MODULARE STÜTZSTRUKTUR FÜR MÖBEL
STRUCTURE DE SUPPORT MODULAIRE POUR MEUBLE

(30) Priority: 02.04.2003 IT BO20030189
(43) Date of publication of application: 06.10.2004
(73) Proprietor: METAL WORK S.r.l., 40050 Calderino di Monte S. Pietro (Bologna) (IT)
(72) Inventor: Bruno, Nicoletti Via Pompilio Nanni 9, (Bologna) (IT)
(74) Representative: Dall'Olio, Giancarlo

(56) References cited:
- DE-A- 4 142 953
- FR-A- 2 753 241
- US-A- 3 887 288
- US-A- 4 036 371

## Description

The present invention relates to the production of pieces of furniture, or more precisely of furniture aimed mainly for offices or other professional premises.

In particular, the invention relates to a new modular support structure, which forms, after having been assembled, a frame for supporting pieces of furniture, and which is aimed at supporting shelves or other constructive elements of the pieces of furniture.

The furniture industry uses a variety of modular support structures formed from a plurality of structural elements such as uprights, aimed at providing a vertical configuration, and crossbars, aimed at assuming a substantially horizontal configuration and at being coupled to the uprights with their ends.

A modular support structure is disclosed in FR-A-2 753 241.

After assembling, these structures form support frames for different articles, such as tables, desks, bookcases, dividing walls, fitting walls and the like.

These types of modular structures not only can assume different configurations in relation to different needs, but they can be also packaged in not particularly big packs, so they can be easily transported to the installation place and then assembled on that place.

After assembling, known structures present various disadvantages, such as insufficient stability of the mutual joints between various structural elements composing it (upright - crossbar connection), fragility of the latter, as well as complexity of the operations necessary to complete their assemblage.

Further, in order to complete the assemblage of known bearing structures and to make stable the mutual connections between various structural elements, often a certain number of "loose" elements, such as screws, washers, threaded sleeves, and the like, must be used, which must be packaged in separate bags. These additional elements are to be rigidly coupled to the structural elements at points corresponding to the mutual connections in order to complete their assemblage, in particular in suitable holes, slots, slits, made in the structural elements, when the piece of furniture is assembled.

This way, not only one or more of these "loose" elements could be lost, but also some time is needed for positioning and fixing the latter, as well as tools such as screwdrivers, keys and others are needed to install the same.

The main object of the present invention is to propose a modular support structure for furniture, in particular desks, tables, shelves, fitting walls, etc., which use a limited number of structural elements to be connected reciprocally and which allows an easy and simple connection.

Another object of the present invention is to propose a modular support structure for furniture, which is particularly stable and strong at the points corresponding to the mutual connections of the structural elements composing it, and which can be assembled in a reduced time with respect to the time needed for known structures.

A further object of the present invention is to propose a support structure, obtained from structural elements, which can be joined one to another by simple connections, allowing to form complicated configurations for supporting furniture, in particular for supporting shelves, articulated one to another and/or to a multi-shelf located at high levels.

The above mentioned objects are achieved by the features of the independent claim, while preferred features are defined in the dependent claims.

The invention will now be described, by way of example, with reference to the accompanying drawings, in which:
- Figure 1 is a schematic, partially top view of an example spatial configuration of a modular support structure for furniture, proposed by the present invention;
- Figure 2 is a section view of Figure 1, taken along the plane II-II;
- Figure 3 is a front, partially sectional view, of a particularly significant structural element of the proposed modular support structure;
- Figure 4 is a schematic, top view of the structural element of Figure 3;
- Figure 5 is an enlarged view with respect to Figure 4, of a significant detail of the structural element of Figure 4;
- Figure 6 is a schematic view of another significant structural element, which can be used to obtain the modular support structure, proposed by the present invention;
- Figure 7 is a fragmentary lateral view of a further structural element of the proposed structure, while Figure 8 is a top view of this element;
- Figure 9 is a section view of Figure 7, taken along the plane A-A;
- Figure 10 is a fragmentary lateral view of another significant structural element used to obtain the modular support structure, proposed by the present invention, while Figure 11 is a top view of this element;
- Figure 12 is a perspective view of an example way of connecting various structural elements of the modular support structure, according to the invention;
- Figures 13, 14 and 15 are three separate fragmentary, lateral, section views of corresponding possible ways of composition of the modular support structure, proposed by the present invention.

With reference to the enclosed figures, the reference letter (S) indicates the modular support structure for furniture, proposed by the present invention, as a whole.

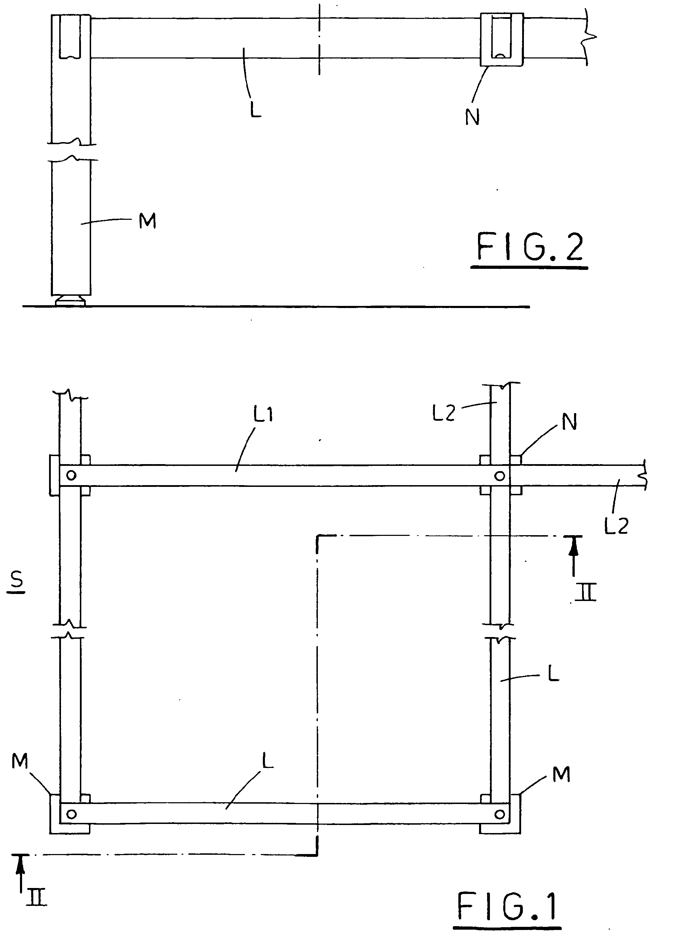

The structure (S), as it appears from Figures 1 and 2, can be formed from a plurality of separate structural elements, which can be reciprocally connected to define a desired spatial configuration, more or less geometrically complicated, of the above pieces of furniture, which can be for example single desks, or workstations including more desks connected to one another, multi-shelves fitting walls, etc.

After having been composed, the proposed structure (S) forms the supporting frame for the above pieces of furniture: for example, the structure (S) shown in Figures 1 and 2 provides the supporting frame for working surfaces (not shown) of a workstation.

The above mentioned structural elements of the structure (S), like known modular structures, include a plurality of uprights (M), aimed at assuming a substantially vertical position in the composition of the structure (S), and a plurality of crossbars, indicated in different Figures with (L, L1, L2), aimed at assuming a substantially horizontal configuration and at being connected to the uprights (M) with their ends, to reproduce the spatial configuration desired for the support of the piece of furniture.

The modular support structure (S) proposed by the present invention differs from known modular structures by the fact that the relevant structural elements can be easily and immediately assembled by rapid mutual connection operations, and by the fact that, after assembling, it is particularly stable and strong.

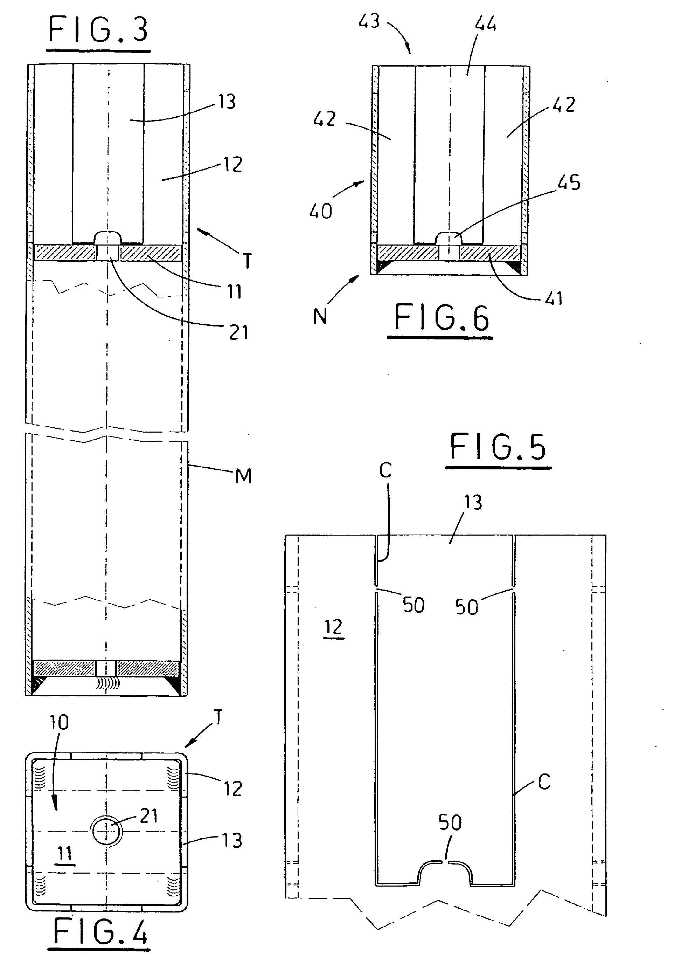

This is possible due to the fact that each upright (M) includes (see for example Figure 3) a tubular bar, provided at top with a head (T) designed for multiple connection with the crossbars (L, L1, L2).

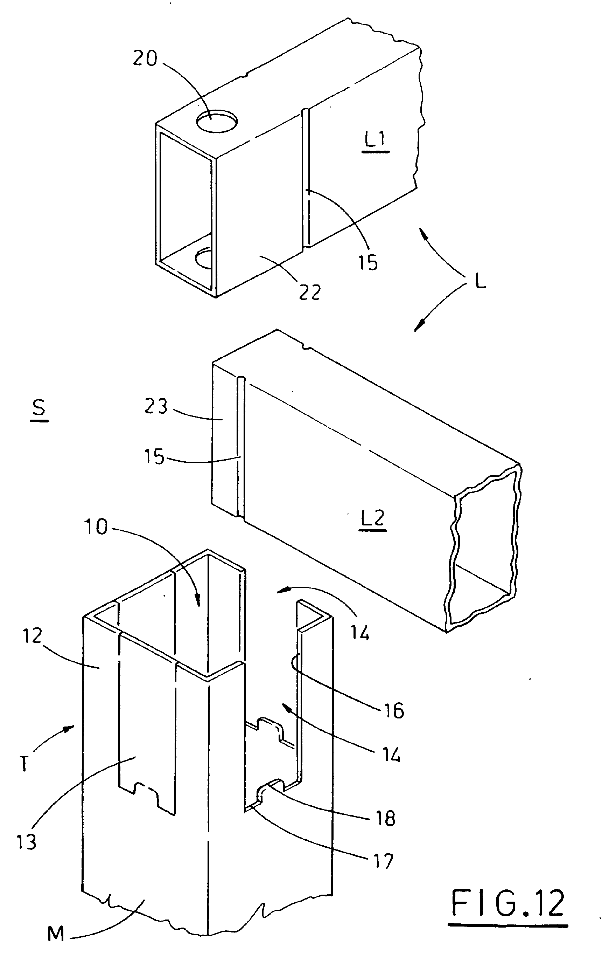

The head (T) defines a vertical hollow (10), which is open at top and whose lateral delimiting walls (12) have removable plates (13), which can be removed to open vertical windows (14) in the walls (12), as it is shown in Figure 12.

Through the vertical windows (14), end connection portions (22, 23) of corresponding crossbars (L, L1, L2) can enter the hollow (10), to obtain a mutual connection with the upright (M).

For this purpose, as shown in Figure 3, the vertical hollow (10), whose cross-section corresponds to the one of the upright (M), is closed at bottom by a horizontal base (11), transversal to the same upright (M) and situated at a predetermined level downwards from the upper end of the upright (M).

The horizontal base (11) is aimed at receiving, resting thereon, the end connection portions (22, 23) of the crossbars (L, L1, L2), coupled with the windows (14) obtained on the lateral walls (12) of the head (T) by removal of the plates (13).

Moreover, the end connecting portions (22, 23) of the crossbars (L, L1, L2) have the cross-section slightly wider than the width of the windows (14), and they feature, near their ends and on opposite lateral walls, suitable vertical grooves (15), mating with the vertical edges (16) of the windows (14).

The vertical grooves (15) have width corresponding to the thickness of the vertical edges (16) of the windows (14) and such depth, as to be engaged in stable connection with the edges (16), during coupling between the relative crossbar (L, L1, L2) and the head (T) of an upright (M), in the area of the head window, so as to stabilize the obtained connection configuration.

In practice, the window (14), obtained in a lateral wall (12) of the head (T) of the upright (M), due to the removal of the plate (13), forms an opening allowing the head (T) of an end connecting portion (22, 23) of a crossbar (L, L1, L2) to be introduces into the hollow (10).

The vertical edges (16) of the window (14) form both, a kind of guiding track, along which the grooves (15) of the end connecting portion (22, 23) slide during the connection with the upright, and a kind of means for mutual stabilization, after the crossbar and the upright have been connected by setting the lower surface of the end connecting portion (22, 23) onto the base (11) of the hollow (10).

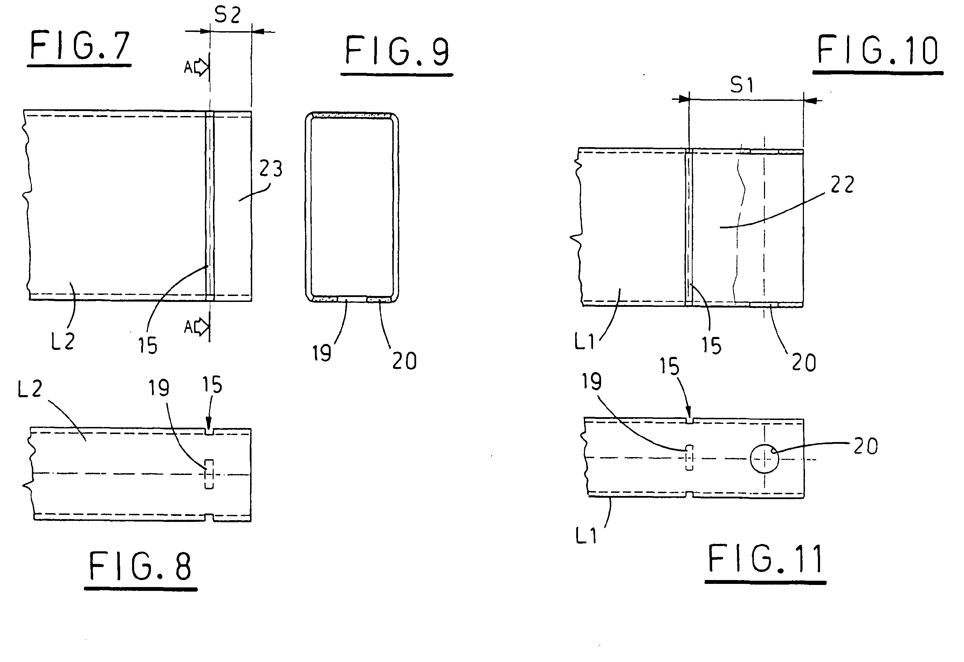

To ensure a better connection stability between the upright and the crossbar, the bottom edge (17) of the windows (14) has a projection (18) (as shown by way of example in Figure 12) matching in shape with a slot (19) made in the lower surface of the end connecting portion (22, 23) of the crossbars (L, L1, L2) (as it can be seen, for instance, in Figures 8 and 9) designed to go in abutment onto the bottom edge (17) of the window (14) due to the connection of these latter with the head (T) of an upright (M). The projection (18) is inserted into the slot (19) when the mutual connection between the crossbar and the upright is completed.

According to the embodiment shown as an example in the proposed figures, the head (T) of each upright includes (as shown in detail in Figure 3 and in Figure 12) a single removable plate (13) for each of the delimiting lateral walls (12).

According to other embodiments, not shown, but included in the scope of the present invention, the head (T) may include a plurality of removable plates (13), for each of the delimiting lateral walls (12).

This way, a plurality of crossbars (L, L1, L2) can be connected to each lateral wall (12) of the head (T) of an upright (M).

Consequently, it is possible to connect the same head (T) of a single upright (M), a plurality of crossbars (L, L1, L2) equal in number to the total number of the plates (13), which can be removed from each wall (12) of the head (T).

For this purpose, taking as reference e.g. the embodiment shown in enclosed figures, according to which the uprights (M) have a square cross-section and each of the four lateral walls (12) delimiting the hollow (10), has only one plate (13), which can be removed to define four vertical windows (14), the dimensions of the base (11) of the hollow (10) of the head (T) are such, as to allow placing the end connecting portions (22, 23) of up to four respective crossbars (L, L1, L2), with each of the end connecting portions (22, 23) being coupled to one of the above mentioned four windows (14).

It appears clearly from the above description, that the proposed bearing structure (S) can be easily and immediately assembled from a plurality of uprights (M) and a plurality of crossbars (L, L1, L2), which are to be connected to the latter, in order to define various geometrical configurations for supporting pieces of furniture.

Other characteristic features of the invention are described in the following.

The crossbars (L, L1, L2) include connection and fastening, first crossbars (L1) and simple connection, second crossbars (L2), for to the head (T) of the uprights (M).

The connection and fastening, first crossbars (L1) have the vertical grooves (15) at their ends and in the lateral faces, in order to mate with the vertical edges (16) of the windows (14), which are made on the lateral walls (12) of the heads (T).

Moreover, the connection and fastening, first crossbars (L1) have coaxial through holes (20), made in the lower and upper faces of the end connecting portions (22, 23), between the grooves (15) and the ends.

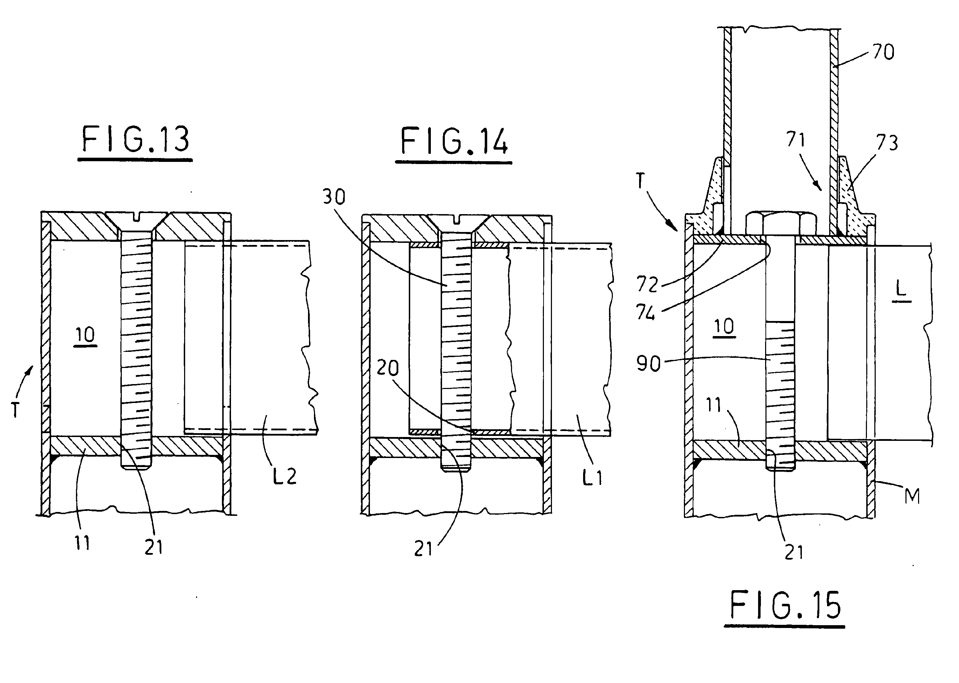

The through holes (20) are to be set in coaxial relation with a through hole (21) made in the base (11) of the hollow (10) of the same head (T), due to the connection of the end portions (22) of the first crossbars (L1) with the head (T) of the upright (M), (see Figures 3 and 14), so that mutual fastening means (30), can be introduced therein.

The second connection crossbars (L2), have only the vertical grooves (15) in the lateral faces of the end connecting portions (23).

It is enough to couple only one connection and fastening, first crossbar (L1) to the head (T) of each upright, in order to ensure the stability and rigidity of the structure (S) obtained by the connection of the crossbars (L, L1, L2) to the uprights (M).

For this purpose, as shown in detail in Figures 7, 8, 10 and 11, the end connection portion (22) of said connection and fastening, first crossbars (L1), included between the grooves (15) and the relevant end, and aimed at engaging with the hollow (10) of the head (T) of a corresponding upright (M) for mutual coupling, has an extension (S1) greater than the extension (S2) of the connection portion (23) of said second longitudinal connection bars (L2), which is included between the grooves (15) and the end of the second crossbars (L2).

This way, the end connection portions (23) of the second crossbars (L2) leave enough space within the hollow (10) for the end connection portions (22) of the first crossbars (L1), as can be seen in Figure 13 in comparison with Figure 14.

It results to be evident that the proposed structure (S) allows a dramatic reduction of the number of "loose" elements, necessary to connect reciprocally various structural elements composing it.

In fact, according to the case shown in the Figures, each upright head can be connected contemporarily to four crossbars, from which only one of the first crossbars, and consequently only one "loose" fastening element is used (in the proposed figures indicated with the reference number 30).

The structure (S) includes also junction elements (N) for the multiple connection of the connection and fastening, first crossbars (L1) and connection, second crossbars (L2). The junction elements (N) may receive in mutual coupling the end connection portions (22, 23) of lined up crossbars so as to join together separate crossbars (L, L1, L2), whose opposite respective end portions (22, 23) are already joined to related uprights (M). The connection way of the junction elements (N) with the crossbars (L, L1, L2) is the same as for the head (T) described hereinabove.

The use of the junction elements (N), like for example the ones shown in Figures 1 and 2, allows to give to the support structure (S), proposed by the present invention and assembled by the connection between uprights-crossbars-junctions, complicated spatial configurations for supporting pieces of furniture, such as multiple workstations having a plurality of shelves, articulated and connected to one another.

Similarly to the shape of the heads (T) of the uprights (M), the junction elements (N) include, as shown in Figure 6, tubular sleeves (40), having a base wall (41) and lateral delimiting walls (42), which define an inner vertical hollow (43), aimed at receiving the connection end portions (22, 23) of the crossbars (L, L1, L2), of the first crossbars (L1), as well as of the second crossbars (L2).

Each of the lateral walls (42) includes at least one plate (44), which can be removed in order to define vertical windows, through which the connection end portions (22, 23) of the crossbars (L, L1, L2), are introduced into the vertical hollow (43).

The thickness of the vertical edges of the windows corresponds to the width of the vertical grooves (15) made in the crossbars (L, L1, L2).

The windows of the junction elements (N) form, at the base edge, a projection (45), whose shape matches a slot (19), made in the lower face of the connection end portions (22, 23) of the crossbars (L, L1, L2) which goes in abutment onto the base wall (41) of the junction (N) for connection with the relative crossbar.

The slot (19) is aimed at engaging with the projection (45), after the connection has been completed.

Advantageously, the outline (C) of the plates (13), which can be removed from the lateral walls (12) of the heads (T) of the uprights (M), is made by cutting the lateral wall. By this cutting, vertical edges (16), the base edge (17), the projection (18), and breaking points (50) are defined along the above mentioned outline (C).

Thus, the removal of the plates (13) is immediate by a simple and weak stress, for example rotation of the plates around the breaking points (50) during connection with a crossbar (L, L1, L2).

In the same way, the outline of the plates (44), which can be removed from the lateral walls (42) of the structural junction elements (N), is made by cutting the lateral walls. By this cutting, vertical edges, the base edge, the projection (45), and the breaking points are defined along the above mentioned outline.

Consequently, also in this case, the removal of the plates (44) is immediate by a simple and weak stress, for example by rotation of the plates around the breaking points during the connection with a crossbar (L, L1, L2).

In order to obtain complicated multi-level geometrical configurations for pieces of furniture, the proposed support modular structure (S) includes other vertical extension structural elements (70), which, as shown in Figure 15, include tubular section bars, whose cross-section is similar to and smaller than the cross-section of the uprights (M).

The lower end (71) of the vertical extension structural elements (70) is coupled to the upper end of the head (T) of the uprights (M).

For this purpose, the lower ends (71) of the vertical extension structural elements (70) have base plates (72), whose shape is complementary to the hollows (10) of the heads (T) and which are aimed at being introduced into the latter, in abutment against the upper face of the crossbars (L, L1, L2), connected thereto.

The vertical extension structural elements (70) include also stabilizing collars (73), which are fitted on the vertical extension structural elements (70) and are set in abutment against the upper end of the heads (T) of the uprights (M), to stabilize the connection between the vertical extension element and the upright.

Like the uprights (M), also the vertical extension structural elements (70) have heads (not shown in Figures), featuring vertical hollows and delimited by lateral walls, in which removable plates are cut in order to define windows, after removal thereof, through which the end connection portions of the crossbars are introduced.

The vertical extension structural element (70) is connected to the upright (M) below by means of through holes (74), made in the base plates (72) and coaxial, after the coupling with heads (T) of the uprights (M), with holes (21) made in the base (11) of the hollows (10) of the heads (T), in order to allow introduction of suitable mutual fastening means (90).

According to a possible embodiment, not shown, the vertical extension structural elements (70) can be coupled, in their upper part, with the above mentioned junction structural elements (N).

The modular support structure (S), proposed by the present invention, is not only easy to assemble, from various structural elements, which can be assembled together by simple and rapid operations, and requires the use of an extremely reduced number of "loose" elements, but it is also extremely versatile, thus allowing to obtain complicated and multi-level configurations.

In fact, although according to the embodiment shown in the proposed figures, the uprights (M), the vertical extension elements (70) and the junction elements (N) have a square cross-section, it is possible to obtain various geometrical configurations for supporting workstations or fitting walls, using, at the same time or alternatively, uprights (M), vertical extension elements (70) and junction elements (N) having respectively triangular, rectangular or polygonal cross-section.

## Claims

1. Modular support structure for pieces of furniture, which can be assembled from a plurality of separate and different structural elements, which can be connected with one another and include a plurality of uprights (M) and a plurality of crossbars (L, L1, L2), which are to be connected, at the relative ends, with said uprights (M), in order to form a desired spatial configuration of said articles, wherein each of the uprights (M) is formed by a tubular section bar with a head (T) at top for multiple connection with said crossbars (L, L1, L2), the head delimiting a vertical hollow (10), open at top and having lateral delimiting walls (12), with each of said walls (12) featuring at least one removable plate (13), which can be removed to open, in said wall (12), a vertical window (14), through which an end connection portion (22, 23) of a crossbar of said crossbars (L, L1, L2) is introduced; **characterised in that** said end portions (22, 23) have cross-sections slightly bigger than the width of the windows (14) and featuring, near their ends and in their lateral surfaces, grooves (15) with a width corresponding to the thickness of the vertical edges (16) of said window (14) and a depth such that they engage with the edges (16) during the coupling between the crossbar (L, L1, L2) and the head (T) of the upright (M), so as to obtain a mutual connection between the crossbar (L, L1, L2) and the head (T) of the upright (M).

2. Structure according to claim 1, **characterized in that** said windows (14) form, at the base edge (17), a projection (18) matching in shape a slot (19) made in the lower face of the end connection portions (22, 23) of said crossbars (L, L1, L2) which is set in abutment against said base edge (17) of said window (14) during the connection of the crossbars (L, L1, L2) with the hollow (10) of a respective upright (M), with said slot (19) being aimed at engaging with said projection (18), after said connection has been completed.

3. Structure according to claim 2, **characterized in that** said hollow (10) has a horizontal base (11), internal and transversal to the upright (M) and situated at a below the upper end of the latter, at a height corresponding to the base edge (17) of said window (14) receiving in abutment on a partial portion of the same base facing the same window (14), a corresponding end connection portion (22, 23) of said crossbars (L, L1, L2).

4. Structure according to claim 1, **characterized in that** said head (T) includes, for each one of the lateral delimiting walls (12), a plurality of removable plates (13), aimed at receiving, in mutual connection, a corresponding plurality of crossbars (L, L1, L2).

5. Structure according to claim 4, **characterized in that** a number of crossbars (L, L1, L2) equal to the total number of plates (13) removable from each wall (12) of said head (T), can be connected to the head (T) of a single upright (M).

6. Structure according to claim 3, **characterized in that** said crossbars (L, L1, L2) include connection and fastening, first crossbars (L1), which have said grooves (15), made near their ends and in their lateral surfaces, for connection with the vertical edges (16) of said windows (14), and which have coaxial through holes (20), made in the lower and upper surfaces of the end connection portions (22), between said grooves (15) and the ends of said crossbars (L1), said through holes (20) being set in coaxial relation with at least one through hole (21) made in the base (11) of the hollow (10) of the head (T), when said first crossbars (L1) are connected with a head (T) of a relative upright (M), in order to allow the introduction of mutual fastening means (30), said crossbars (L, L1, L2) including also connection, second connection crossbars (L2), which have at their ends and in their lateral surfaces, only the above mentioned grooves (15) for mutual coupling with the vertical edges (16) of said windows (14).

7. Structure according to claim 6, **characterized in that** the end connection portion (22) of said connection and fastening, first crossbars (L1), included between the grooves (15) and the relevant end, and aimed at engaging with the hollow (10) of the head (T) of a corresponding upright (M) for mutual coupling, has an extension (S1) greater than the extension (S2) of the connection portion (23) of said connection second crossbars (L2), which is included between the grooves (15) and the end of the second crossbars (L2).

8. Structure according to claim 7, **characterized in that** it includes a plurality of said connecting, second crossbars (L2) and at least one of said connecting and fastening, first crossbars (L1), mutually coupled and connected to corresponding windows (14) of the same multiple connection head (T) of only one upright (M).

9. Structure according to claim 1 and claim 6,
**characterized in that** it includes also junction structural elements (N) for multiple connection of said longitudinal connecting and fastening first bars (L1) and said connecting, second crossbars (L2), aimed at receiving in mutual coupling the end connection portions (22, 23) of the latter and at joining separate crossbars (L, L1, L2), already joined with their remaining end portions (22, 23) to respective uprights (M), to define complicated spatial configurations for supporting said pieces of furniture.

10. Structure according to claim 9, **characterized in that** said junction structural elements (N) include tubular sleeves (40) having a base wall (41) and lateral walls (42) delimiting and defining an internal vertical hollow (43), aimed at being occupied by the end connection portions (22, 23) of said crossbars (L, L1, L2), connection and fastening, first crossbars (L1) and connection, second crossbars (L2), with each of said lateral walls (42) including at least one removable plate (44), which can be removed to define windows for allowing the introduction of said end connection portions (22, 23) of said crossbars (L, L1, L2) into said vertical hollow (43), with the thickness of the vertical edges of the windows corresponding to the width of the grooves (15) made in the crossbars (L, L1, L2).

11. Structure according to claim 10, **characterized in that** the windows of said junction structural elements (N) form, near the base edge, a projection (45), whose shape is complementary to a slot (19) made in the lower surface of the end connection portions (22, 23) of said crossbars (L, L1, L2) which goes in abutment against the base wall (41) of the junction (N) in mutual coupling with the relevant crossbar, with said slot (19) being aimed at engaging with said projection (45), after said mutual coupling has been completed.

12. Structure, according to claim 1 and claim 2, **characterized in that** the outline (C) of the plates (13) which can be removed from the lateral walls (12) of the heads (T) of said uprights (M) is obtained by cutting each lateral wall of the heads, by which cutting, vertical edges (16), the base edge (17), the projection (18), and breaking points (50) for removal of the plate, are defined along each above mentioned outline (C).

13. Structure according to claim 10, **characterized in that** the outline of the plates (44),which can be removed from the lateral walls (42) to delimit said junction elements (N) is obtained by cutting each lateral wall of the junction element, by which cutting, vertical edges, the base edge, the projection (45), and breaking points for removal of the plate, are defined along each above mentioned outline (C).

14. Structure according to claim 1, **characterized in that** it includes vertical extension structural elements (70), formed by tubular section bars, whose cross-section is similar to and smaller than the cross-section of said uprights (M), and which are connected at the lower end (71) with the upper end of the head (T) of said uprights (M), to obtain a multi-level configuration for supporting said pieces of furniture.

15. Structure according to claim 14, **characterized in that** the lower ends (71) of said vertical extension structural elements (70) have base plates (72), whose shape is complementary to the hollows (10) of said heads (T) and which are introduced into the latter, in abutment against the upper face of the crossbars (L, L1, L2), connected thereto, with said vertical extension structural elements (70) including stabilizing collars (73), which are fitted on the vertical extension structural elements (70) and set in abutment against the upper end of the heads (T) of the uprights (M).

16. Structure according to claim 15, **characterized in that** said base plates (72) have through holes (74) arranged in coaxial relation, after the connection with the heads (T) of the uprights (M), with holes (21) made in the base (11) of the hollows (10) of the heads (T), in order to allow the introduction of suitable mutual fastening means (90).

17. Structure according to claim 10 and claim 14, **characterized in that** said vertical extension structural elements (70) can be connected, at top, with said junction elements (N).

18. Structure according to claim 1, **characterized in that** the cross-section of said uprights (M), said vertical extension structural elements (70) and said junction structural elements (N) is triangular.

19. Structure according to claim 1, **characterized in that** the cross-section of said uprights (M), said vertical extension structural elements (70) and said junction structural elements (N) is squared.

20. Structure according to claim 1, **characterized in that** the cross-section of said uprights (M), said vertical extension structural elements (70) and said junction structural elements (N) is rectangular.

21. Structure according to claim 1, **characterized in that** the cross-section of said uprights (M), said vertical extension structural elements (70) and said junction structural elements (N) is polygonal.

## Patentansprüche

1. Modulare Stützstruktur für Möbelstücke, die aus einer Vielzahl separater und unterschiedlicher Strukturelemente zusammengebaut werden kann, welche miteinander verbunden werden können und eine Vielzahl von Ständern (M) sowie eine Vielzahl von Querstangen (L, L1, L2) aufweisen, die an den entsprechenden Enden mit den Ständern (M) verbunden werden sollen, um eine gewünschte räumliche Anordnung der Stücke zu bilden, wobei jeder der Ständer (M) durch eine Stange mit rohrförmigem Querschnitt mit einem Kopf (T) an ihrem oberen Ende zur Mehrfachverbindung mit den Querstangen (L, L1, L2) gebildet ist, und der Kopf einen vertikalen Hohlraum (10) begrenzt, der an seinem oberen Ende offen ist und seitliche Begrenzungswände (12) aufweist, wobei jede der Wände (12) mindestens eine abnehmbare Platte (13) aufweist, die abgenommen werden kann, um in der Wand (12) ein vertikales Fenster (14) zu öffnen, durch das ein Endverbindungsabschnitt (22, 23) einer der Querstangen (L, L1, L2) eingeführt wird, **dadurch gekennzeichnet, dass** die Endabschnitte (22, 23) Querschnitte haben, die etwas größer als die Breite der Fenster (14) sind, und nahe ihren Enden sowie in ihren Seitenflächen Nuten (15) mit einer Breite, die der Dicke der vertikalen Kanten (16) des Fensters (14) entspricht, und mit einer solchen Tiefe aufweisen, dass sie während der Kopplung zwischen der Querstange (L, L1, L2) und dem Kopf (T) des Ständers (M) in Eingriff mit den Kanten (16) treten, um eine gegenseitige Verbindung zwischen der Querstange (L, L1, L2) und dem Kopf (T) des Ständers (M) zu erhalten.

2. Struktur nach Anspruch 1, **dadurch gekennzeichnet, dass** die Fenster (14) an der Unterkante (17) einen Vorsprung (18) bilden, dessen Form zu einem Schlitz (19) passt, der in der Unterseite der Endverbindungsabschnitte (22, 23) der Querstangen (L, L1, L2) gebildet ist und während der Verbindung der Querstangen (L, L1, L2) mit dem Hohlraum (10) eines entsprechenden Ständers (M) zur Anlage an der Unterkante (17) des Fensters (14) gebracht wird, wobei der Schlitz (19) dazu bestimmt ist, in Eingriff mit dem Vorsprung (18) zu treten, nachdem die Verbindung vollständig hergestellt ist.

3. Struktur nach Anspruch 2, **dadurch gekennzeichnet, dass** der Hohlraum (10) eine horizontale Basis (11), die innerhalb des Ständers (M) und quer zu diesem verläuft sowie unter dessen oberem Ende in einer Höhe angeordnet ist, die der Unterkante (17) des Fensters (14) entspricht, an dem auf einem Teilabschnitt der Basis, der dem Fenster (14) gegenüberliegt, ein entsprechender Endverbindungsabschnitt (22, 23) der Querstangen (L, L1, L2) zur Anlage kommt.

4. Struktur nach Anspruch 1, **dadurch gekennzeichnet, dass** der Kopf (T) für jede der seitlichen Begrenzungswände (12) eine Vielzahl von abnehmbare Platten (13) aufweist, die dazu bestimmt sind, bei gegenseitiger Verbindung eine entsprechende Vielzahl von Querstangen (L, L1, L2) aufzunehmen.

5. Struktur nach Anspruch 4, **dadurch gekennzeichnet, dass** eine Anzahl Querstangen (L, L1, L2), die gleich der Gesamtanzahl von jeder Wand (12) des Kopfes (T) abnehmbarer Platten (13) ist, mit dem Kopf (T) eines einzigen Ständers (M) verbunden werden kann.

6. Struktur nach Anspruch 3, **dadurch gekennzeichnet, dass** die Querstangen (L, L1, L2) erste Verbindungs- und Befestigungsquerstangen (L1) aufweisen, die mit den nahe ihren Enden und in ihren Seitenflächen gebildeten Nuten (15) zur Verbindung mit den vertikalen Kanten (16) der Fenster (14) versehen sind und koaxiale Durchgangslöcher (20) aufweisen, die in den unteren und oberen Flächen der Endverbindungsabschnitte (22), zwischen den Nuten (15) und den Enden der Querstangen (L1) gebildet sind, wobei die Durchgangslöcher (20) in koaxialer Beziehung zu mindestens einem in der Basis (11) des Hohlraums (10) des Kopfes (T) gebildeten Durchgangsloch (21) angeordnet sind, wenn die ersten Querstangen (L1) mit einem Kopf (T) eines entsprechenden Ständers (M) verbunden sind, um das Einführen von Mitteln (30) zur gegenseitigen Befestigung zu gestatten, wobei die Querstangen (L, L1, L2) auch zweite Verbindungsquerstangen (L2) zum Verbinden aufweisen, die an ihren Enden und in ihren Seitenflächen nur die oben erwähnten Nuten (15) zum gegenseitigen Koppeln mit den vertikalen Kanten (16) der Fenster (14) aufweisen.

7. Struktur nach Anspruch 6, **dadurch gekennzeichnet, dass** der Endverbindungsabschnitt (22) der ersten Verbindungs- und Befestigungsquerstangen (L1), der zwischen den Nuten (15) und dem entsprechenden Ende enthalten und zum Eingriff mit dem Hohlraum (10) des Kopfes (T) eines entsprechenden Ständers (M) zum gegenseitigen Koppeln bestimmt ist, eine Ausdehnung (S1) hat, die größer als die Ausdehnung (S2) des Verbindungsabschnittes (23) der zweiten Verbindungsquerstangen (L2) ist, welcher zwischen den Nuten (15) und dem Ende der zweiten Querstangen (L2) enthalten ist.

8. Struktur nach Anspruch 7, **dadurch gekennzeichnet, dass** sie eine Vielzahl der zweiten Verbindungsquerstangen (L2) und mindestens eine der ersten Verbindungs- und Befestigungsquerstangen (L1) aufweist, die gegenseitig gekoppelt und mit entsprechenden Fenstern (14) desselben Mehrfachverbindungskopfes (T) nur eines einzigen Ständers (M) verbunden sind.

9. Struktur nach Anspruch 1 und Anspruch 6, **dadurch gekennzeichnet, dass** sie auch Verbindungsstrukturelemente (N) zur Mehrfachverbindung der in Längsrichtung verlaufenden, ersten Verbindungs- und Befestigungsstangen (L1) und der zweiten Verbindungsquerstangen (L2) aufweist, die bestimmt sind, die Endverbindungsabschnitte (22, 23) der letzteren in gegenseitiger Kopplung aufzunehmen und die voneinander getrennten Querstangen (L, L1, L2), die über ihre übrigen Endabschnitte (22, 23) bereits mit den jeweiligen Ständern (M) verbunden sind, miteinander zu verbinden, um komplizierte räumliche Anordnungen zum Stützen der Möbelstücke festzulegen.

10. Struktur nach Anspruch 9, **dadurch gekennzeichnet, dass** die Verbindungsstrukturelemente (N) rohrförmige Hülsen (40) mit einer unteren Wand (41) und Seitenwänden (42) aufweisen, die einen inneren, vertikalen Hohlraum (43) begrenzen und festlegen, der dazu bestimmt ist, von den Endverbindungsabschnitten (22, 23) der Querstangen (L, L1, L2), ersten Verbindungs-und Befestigungsquerstangen (L1) und zweiten Verbindungsquerstangen (L2) eingenommen zu werden, wobei jede der Seitenwände (42) mindestens eine abnehmbare Platte (44) aufweist, die abgenommen werden kann, um Fenster festzulegen, die das Einführen der Endverbindungsabschnitte (22, 23) der Querstangen (L, L1, L2) in den vertikalen Hohlraum (43) gestatten, wobei die Dicke der vertikalen Kanten der Fenster der Breite der in den Querstangen (L, L1, L2) gebildeten Nuten (15) entspricht.

11. Struktur nach Anspruch 10, **dadurch gekennzeichnet, dass** die Fenster der Verbindungsstrukturelemente (N) nahe der Unterkante einen Vorsprung (45) bilden, dessen Form komplementär zu einem in der Unterseite der Endverbindungsabschnitte (22, 23) der abschnitte (22, 23) der Querstangen (L, L1, L2) ausgebildeten Schlitz (19) ist, der gegen die untere Wand (41) der Verbindung (N) in gegenseitiger Kopplung mit der entsprechenden Querstange zur Anlage kommt, wobei der Schlitz (19) dazu bestimmt ist, mit dem Vorsprung (45) in Eingriff zu treten, nachdem die gegenseitige Kopplung abgeschlossen ist.

12. Struktur nach Anspruch 1 und Anspruch 2, **dadurch gekennzeichnet, dass** die Kontur (C) der Platten (13), die von den Seitenwänden (12) der Köpfe (T) der Ständer (M) abgenommen werden können, durch Zuschneiden jeder Seitenwand der Köpfe erhalten wird, wobei durch dieses Zuschneiden vertikale Kanten (16), die Unterkante (17), der Vorsprung (18) und Sollbruchstellen (50) zum Abnehmen der Platte entlang jeder oben erwähnten Kontur (C) festgelegt werden.

13. Struktur nach Anspruch 10, **dadurch gekennzeichnet, dass** die Kontur der Platten (44), die von den Seitenwänden (42) abgenommen werden können, um die Verbindungselemente (N) zu begrenzen, durch Zuschneiden jeder Seitenwand des Verbindungselementes erhalten wird, wobei durch dieses Zuschneiden vertikale Kanten, die Unterkante, der Vorsprung (45) und Sollbruchstellen zum Abnehmen der Platte entlang jeder oben erwähnten Kontur (C) festgelegt werden.

14. Struktur nach Anspruch 1, **dadurch gekennzeichnet, dass** sie vertikal verlaufende Strukturelemente (70) aufweist, die durch Stangen mit rohrförmigem Querschnitt gebildet sind, deren Querschnitt ähnlich dem und kleiner als der Querschnitt der Ständer (M) ist, und die am unteren Ende (71) mit dem oberen Ende des Kopfes (T) der Ständer (M) verbunden sind, um eine Anordnung mit mehreren Ebenen zum Stützen der Möbelstücke zu erhalten.

15. Struktur nach Anspruch 14, **dadurch gekennzeichnet, dass** die unteren Enden (71) der vertikal verlaufenden Strukturelemente (70) Basisplatten (72) aufweisen, deren Form komplementär zu den Hohlräumen (10) der Köpfe (T) ist und die in die letzteren, in Anlage an der oberen Fläche der mit ihnen verbundenen Querstangen (L, L1, L2) eingeführt werden, wobei die vertikal verlaufenden Strukturelemente (70) Stabilisierungsmanschetten (73) aufweisen, die auf den vertikal verlaufenden Strukturelementen (70) sitzen und in Anlage gegen das obere Ende der Köpfe (T) der Ständer (M) gebracht werden.

16. Struktur nach Anspruch 15, **dadurch gekennzeichnet, dass** die Basisplatten (72) Durchgangslöcher (74) aufweisen, die nach der Verbindung mit den Köpfen (T) der Ständer (M) in koaxialer Beziehung zu in der Basis (11) der Hohlräume (10) der Köpfe (T) gebildeten Löchern (21) angeordnet werden, um das Ei-nführen geeigneter Mittel (90) zur gegenseitigen Befestigung zu gestatten.

17. Struktur nach Anspruch 10 und Anspruch 14, **dadurch gekennzeichnet, dass** die vertikal verlaufenden Strukturelemente (70) am oberen Ende mit den Verbindungselementen (N) verbunden werden können.

18. Struktur nach Anspruch 1, **dadurch gekennzeichnet, dass** der Querschnitt der Ständer (M), der vertikal verlaufenden Strukturelemente (70) und der Verbindungsstrukturelemente (N) dreieckig ist.

19. Struktur nach Anspruch 1, **dadurch gekennzeichnet, dass** der Querschnitt der Ständer (M), der vertikal verlaufenden Strukturelemente (70) und der Verbindungsstrukturelemente (N) quadratisch ist.

20. Struktur nach Anspruch 1, **dadurch gekennzeichnet, dass** der Querschnitt der Ständer (M), der vertikal verlaufenden Strukturelemente (70) und der Verbindungsstrukturelemente (N) rechteckig ist.

21. Struktur nach Anspruch 1, **dadurch gekennzeichnet, dass** der Querschnitt der Ständer (M), der vertikal verlaufenden Strukturelemente (70) und der Verbindungsstrukturelemente (N) polygonförmig ist.

## Revendications

1. Structure de support modulaire pour meuble, qui peut être assemblée à partir d'une pluralité d'éléments structurels séparés et différents, qui peuvent être raccordés les uns aux autres et qui comprennent une pluralité de montants (M) et une pluralité de traverses (L, L1, L2), qui doivent être raccordées, au niveau des extrémités correspondantes, auxdits montants (M), afin de former une configuration spatiale souhaitée desdits articles, dans laquelle chacun des montants (M) est formé par une section de barre tubulaire dotée d'une tête (T) sur le dessus pour un raccordement multiple auxdites traverses (L, L1, L2), la tête délimitant un creux vertical (10), ouvert sur le dessus et ayant des parois de délimitation latérales (12), chacune desdites parois (12) présentant au moins une plaque amovible (13), qui peut être enlevée pour ouvrir, dans ladite paroi (12), une fenêtre verticale (14), à travers laquelle une partie d'extrémité de raccordement (22, 23) d'une traverse desdites traverses (L, L1, L2) est introduite ; **caractérisée en ce que** lesdites parties d'extrémité (22, 23) ont des sections transversales légèrement plus grandes que la largeur des fenêtres (14) et présentant, près de leurs extrémités et dans leurs surfaces latérales, des rainures (15) avec une largeur correspondant à l'épaisseur des bords verticaux (16) de ladite fenêtre (14) et une profondeur de telle sorte qu'elles entrent en prise avec les bords (16) pendant le couplage entre la traverse (L, L1, L2) et la tête (T) du montant (M), de façon à obtenir un raccordement mutuel entre la traverse (L, L1, L2) et la tête (T) du montant (M).

2. Structure selon la revendication 1, **caractérisée en ce que** lesdites fenêtres (14) forment, au niveau du bord de base (17), une projection (18) dont la forme s'adapte à une fente (19) pratiquée dans la face inférieure des parties d'extrémités de raccordement (22, 23) desdites traverses (L, L1, L2) qui est placée en butée contre ledit bord de base (17) de ladite fenêtre (14) pendant le raccordement des traverses (L, L1, L2) au creux (10) d'un montant respectif (M), ladite fente (19) étant destinée à entrer en prise avec ladite projection (18), après que ledit raccordement a été réalisé.

3. Structure selon la revendication 2, **caractérisée en ce que** ledit creux (10) a une base horizontale (11), interne et transversale par rapport au montant (M) et située en dessous de l'extrémité supérieure de ce dernier, à une hauteur correspondant au bord de base (17) de ladite fenêtre (14) recevant en butée sur une partie partielle de la base en question faisant face à la fenêtre (14) en question, une partie d'extrémité de raccordement correspondante (22, 23) desdites traverses (L, L1, L2).

4. Structure selon la revendication 1, **caractérisée en ce que** ladite tête (T) comprend, pour chacune des parois de délimitation latérales (12), une pluralité de plaques amovibles (13), visant à recevoir, dans un raccordement mutuel, une pluralité correspondante de traverses (L, L1, L2).

5. Structure selon la revendication 4, **caractérisée en ce qu'**un nombre de traverses (L, L1, L2) égal au nombre total de plaques (13) pouvant être retirées de chaque paroi (12) de ladite tête (T), peut être raccordé à la tête (T) d'un seul montant (M).

6. Structure selon la revendication 3, **caractérisée en ce que** lesdites traverses (L, L1, L2) comprennent des premières traverses de raccordement et de fixation (L1), qui sont dotées desdites rainures (15), pratiquées près de leurs extrémités et dans leurs surfaces latérales, pour un raccordement aux bords verticaux (16) desdites fenêtres (14), et qui sont dotées de trous débouchants coaxiaux (20), pratiqués dans les surfaces inférieure et supérieure des parties d'extrémités de raccordement (22), entre lesdites rainures (15) et les extrémités desdites traverses (L1), lesdits trous débouchants (20) étant placés en relation coaxiale avec au moins un trou débouchant (21) pratiqué dans la base (11) du creux (10) de la tête (T), lorsque lesdites premières traverses (L1) sont raccordées à une tête (T) d'un montant relatif (M), afin de permettre l'introduction des moyens de fixation mutuelle (30), lesdites traverses (L, L1, L2) comprenant également les secondes traverses de raccordement (L2), qui sont dotées à leurs extrémités et dans leurs surfaces latérales, uniquement des rainures susmentionnées (15) pour un couplage mutuel avec les bords verticaux (16) desdites fenêtres (14),

7. Structure selon la revendication 6, **caractérisée en ce que** la partie d'extrémité de raccordement (22) desdites premières traverses de raccordement et de fixation (L1), comprise entre les rainures (15) et l'extrémité adéquate, et destinée à entrer en prise avec le creux (10) de la tête (T) d'un montant correspondant (M) pour un couplage mutuel, présente une extension (S1) supérieure à l'extension (S2) de la partie de raccordement (23) desdites secondes traverses de raccordement (L2), qui est comprise entre les rainures (15) et l'extrémité des secondes traverses (L2).

8. Structure selon la revendication 7, **caractérisée en ce qu'**elle comprend une pluralité desdites secondes traverses de raccordement (L2) et au moins l'une desdites premières traverses de raccordement et de fixation (L1), mutuellement couplées et raccordées aux fenêtres (14) correspondantes de ladite tête (T) de raccordement multiple d'un seul montant (M).

9. Structure selon la revendication 1 et la revendication 6, **caractérisée en ce qu'**elle comprend également des éléments structurels de jonction (N) pour un raccordement multiple desdites premières barres longitudinales de raccordement et de fixation (L1) et desdites secondes traverses de raccordement (L2), visant à recevoir dans un couplage mutuel les parties d'extrémité de raccordement (22, 23) de ces dernières et à joindre les traverses séparées (L, L1, L2), déjà jointes à leurs parties d'extrémité restantes (22, 23) aux montants respectifs (M), afin de définir des configurations spatiales complexes pour supporter ledit meuble.

10. Structure selon la revendication 9, **caractérisée en ce que** lesdits éléments structurels de jonction (N) comprennent des chemises tubulaires (40) dotées d'une paroi de base (41) et de parois latérales (42) délimitant et définissant un creux vertical interne (43), visant à être occupé par les parties d'extrémité de raccordement (22, 23) desdites traverses (L, L1, L2), des premières traverses de raccordement et de fixation (L1) et des secondes traverses de raccordement (L2), chacune desdites parois latérales (42) comprenant au moins une plaque amovible (44), qui peut être retirée afin de définir des fenêtres pour permettre l'introduction desdites parties d'extrémité de raccordement (22, 23) desdites traverses (L, L1, L2) dans ledit creux vertical (43), l'épaisseur des bords verticaux des fenêtres correspondant à la largeur des rainures (15) pratiquées dans les traverses (L, L1, L2).

11. Structure selon la revendication 10, **caractérisée en ce que** les fenêtres desdits éléments structurels de jonction (N) forment, près du bord de base, une projection (45), dont la forme est complémentaire à une fente (19) pratiquée dans la surface inférieure des parties d'extrémité de raccordement (22, 23) desdites traverses (L, L1, L2) qui va en butée contre la paroi de base (41) de la jonction (N) pour un couplage mutuel avec la traverse adéquate, ladite fente (19) visant à entrer en prise avec ladite projection (45), après la réalisation dudit couplage mutuel.

12. Structure selon la revendication 1 et la revendication 2, **caractérisée en ce que** le contour (C) des plaques (13) qui peuvent être retirées des parois latérales (12) des têtes (T) desdits montants (M), est obtenu en découpant chaque paroi latérale des têtes, découpe par laquelle, les bords verticaux (16), le bord de base (17), la projection (18) et les points de rupture (50) pour le retrait de la plaque sont définis le long de chaque contour (C) susmentionné.

13. Structure selon la revendication 10, **caractérisée en ce que** le contour des plaques (44) qui peuvent être retirées des parois latérales (42) pour délimiter lesdits éléments de jonction (N) est obtenu en découpant chaque paroi latérale dudit élément de jonction, découpe par laquelle, les bords verticaux, le bord de base, la projection (45) et les points de rupture pour le retrait de la plaque sont définis le long de chaque contour (C) susmentionné.

14. Structure selon la revendication 1, **caractérisée en ce qu'**elle comprend des éléments structurels d'extension verticale (70), formés par des barres de section tubulaires, dont la section transversale est similaire à et plus petite que 1a section transversale desdits montants (M), et qui sont raccordés au niveau de l'extrémité inférieure (71) à l'extrémité supérieure de la tête (T) desdits montants (M), pour obtenir une configuration à niveaux multiples afin de supporter ledit meuble.

15. Structure selon la revendication 14, **caractérisée en ce que** les extrémités inférieures (71) desdits éléments structurels d'extension verticale (70) sont dotées de plaques de base (72), dont la forme est complémentaire par rapport aux creux (10) desdites têtes (T) et qui sont introduites dans ces derniers, en butée contre la face supérieure des traverses (L, L1, L2), raccordées à ces dernières, lesdits éléments structurels d'extension verticale (70) comprenant des colliers de stabilisation (73) qui sont installés sur les éléments structurels d'extension verticale (70) et placés en butée contre l'extrémité supérieure des têtes (T) des montants (M).

16. Structure selon la revendication 15, **caractérisée en ce que** lesdites plaques de base (72) possèdent des trous débouchant (74) agencés en relation coaxiale, après le raccordement aux têtes (T) des montants (M), à des orifices (21) pratiqués dans la base (11) des creux (10) des têtes (T), afin de permettre l'introduction des moyens de fixation mutuelle adaptés (90).

17. Structure selon la revendication 10 et la revendication 14, **caractérisée en ce que** lesdits éléments structurels d'extension verticale (70) peuvent être raccordés, au niveau supérieur, auxdits éléments de jonction (N).

18. Structure selon la revendication 1, **caractérisée en ce que** la section transversale desdits montants (M), desdits éléments structurels d'extension verticale (70) et desdits éléments structurels de jonction (N) est triangulaire.

19. Structure selon la revendication 1, **caractérisée en ce que** la section transversale desdits montants (M), desdits éléments structurels d'extension verticale (70) et desdits éléments structurels de jonction (N) est carrée.

20. Structure selon la revendication 1, **caractérisée en ce que** la section transversale desdits montants (M), desdits éléments structurels d'extension verticale (70) et desdits éléments structurels de jonction (N) est rectangulaire.

21. Structure selon la revendication 1, **caractérisée en ce que** la section transversale desdits montants (M), desdits éléments structurels d'extension verticale (70) et desdits éléments structurels de jonction (N) est polygonale.
